# EUROPÄISCHE PATENTANMELDUNG

(11) **EP 0 530 631 A2**
(43) Veröffentlichungstag der Anmeldung: **10.03.1993**
(21) Anmeldenummer: 92114382.2
(22) Anmeldetag: 24.08.1992
(51) Int. Cl.: B60P 3/22

(54) **Selbsttragender Tankauflieger für Sattelfahrzeuge**

(30) Priorität: 31.08.1991 DE 4128971
(71) Anmelder: KROLL FAHRZEUGBAU UMWELTTECHNIK GmbH, D-21465 Reinbek (DE)
(72) Erfinder: Ewert, Michael, W-2057 Reinbek (DE)
(74) Vertreter: Zapfe, Hans, Dipl.-Ing.

(57) **Zusammenfassung**

Ein selbsttragender Tankauflieger für Sattelfahrzeuge mit mindestens einer sich in Fahrtrichtung erstreckenden Längsachse (A-A) besitzt in seinem Sattellagerungsbereich durch Abweichung vom Kreisquerschnitt an der Unterseite eine Ausnehmung (8) für die Aufnahme des Sattels und der Hinterräder des Sattelfahrzeugs. Eine die Tankunterseite bildende Begrenzungswand (3) der Ausnehmung (8) besitzt durch Profilierung eine erhöhte Gestaltfestigkeit und ist zusätzlich mit eingeschweißten Versteifungselementen versehen. Zwecks Vergrößerung des Tankvolumens und der Gestaltfestigkeit sowie Erleichterung der Inspektion ist die Begrenzungswand (3) der Ausnehmung (8) in Form einer Doppelwelle mit zwei seitlichen, nach oben gewölbten Zylinder-Teilflächen und mit einer dazwischenliegenden, nach unten gewölbten Zylinder-Teilfläche profiliert, wobei die Krümmungsachsen im wesentlichen in Fahrtrichtung verlaufen und die Krümmungsradien an den Übergangsstellen der Zylinder-Teilflächen gemeinsame Tangenten haben. Ferner weisen die Versteifungselemente zwei Längsholme (10, 11) auf, deren Oberkanten in den nach oben gewölbten Zylinder-Teilflächen liegen und die durch Querholme miteinander verbunden sind. Die Oberkanten der Querholme sind im wesentlichen der Wellenform der Begrenzungswand (3) angepaßt.

## Beschreibung

Die Erfindung betrifft einen selbsttragenden Tankauflieger für Sattelfahrzeuge mit mindestens einer sich in Fahrrichtung erstreckenden Längsachse und mit einem Tank-Vorderteil, das in seinem Sattellagerungsbereich durch Abweichung vom Kreisquerschnitt an der Unterseite eine Ausnehmung für die Aufnahme des Sattels und der Hinterräder des Sattelfahrzeugs aufweist, wobei die die Tankunterseite bildende Begrenzungswand der Ausnehmung durch Profilierung eine erhöhte Gestaltfestigkeit besitzt, und zusätzlich mit eingeschweißten Versteifungselementen versehen ist.

Derartige Tankauflieger sind Stand der Technik; sie sind in der Regel aus mehreren Abschnitten zusammengesetzt, die aus Blech bestehen und sich in einer Ebene abwickeln lassen. Die Abschnitte lassen sich als hohle Kegelstümpfe beschreiben, die einen äußerst spitzen Öffnungswinkel haben und mit ihren größeren Basisflächen derart aneinandergesetzt und miteinander verschweißt sind, daß die beiden obersten Mantellinien eine geradlinig durchgehende Firstlinie bilden. Die Stoßflächen sind dabei Kegelschnitt-Linien, d.h. Ellipsen, die nahezu einer Kreisform entsprechen. Das vordere Tankteil verjüngt sich in Fahrtrichtung und das hintere Tankteil entgegen der Fahrtrichtung. Dadurch entsteht in der Mitte ein tiefster Punkt, an dem sich das Entnahmeventil befindet.

Bei der Berechnung derartiger Tankauflieger, die in der Regel auch noch druckfest ausgebildet sein sollen, stellt sich im Hinblick auf die zulässige Maximalhöhe das Problem einer Optimierung im Sinne eines maximalen Füllvolumens bei maximaler Gestaltfestigkeit. Diese Forderungen beruhen auf teilweise diametral entgegengesetzten Überlegungen. Die Forderung nach einer maximalen Gestaltfestigkeit hat in letzter Zeit an Bedeutung gewonnen, da mit derartigen Fahrzeugen auch die überwiegend in schlechtem Erhaltungszustand befindlichen Straßen der neuen Bundesländer befahren werden sollen.

Die Abmessungen der im Tank-Vorderteil vorhandenen Ausnehmung sind durch die Sattelhöhe des Sattelfahrzeugs bedingt sowie durch die Forderung einer ausreichenden Schwenkfreiheit des Tankaufliegers gegenüber den Hinterrädern der Zugmaschine. Hierbei ist die zusätzliche Forderung zu erfüllen, daß der Schwerpunkt des gesamten Tankaufliegers im Hinblick auf die geforderte Kurvenfestigkeit des Fahrzeugs möglichst tief gelegt werden soll. Schließlich ist dabei auch die Forderung zu erfüllen, daß der Tankauflieger auch im Bereich der Ausnehmung restlos entleert werden kann, weil derartige Tanks auch für unterschiedliche Flüssigkeiten benutzt werden sollen.

Durch die DE-OS 39 26 448 ist ein Tankauflieger der eingangs beschriebenen Gattung bekannt, bei dem die Begrenzungswand der Ausnehmung im Sattellagerungsbereich durch eine zylinderförmig nach oben gewölbte Schale gebildet wird, die nach unten hin durch eine ebene Platte verschlossen ist, an der die Sattellagerung befestigt ist. Zwischen der gewölbten Oberschale und der ebenen Unterschale befinden sich zahlreiche L-förmig abgewinkelte Zwischenstege. Die Herstellung eines solchen, als "Tragflächenprofil" bezeichneten Einsatzes ist aufwendig, entzieht dem Tankvolumen einen nicht unbeträchtlichen Volumensanteil, und die Unterseite der gewölbten Oberschale ist für eine geforderte Inspektion nicht zugänglich.

Durch die US-PS 2 536 263 ist ein Tankauflieger bekannt, bei dem der Querschnitt des Tank-Vorderteils im wesentlichen nur der Fläche eines angenäherten Halbkreises entspricht, d.h. die in der Mitte nach unten abgesenkte untere Begrenzungswand endet seitlich in etwa an diametral gegenüberliegenden Punkten. Bei diesem Tankauflieger besteht der größte Teil der unteren Begrenzungswand aus abgewinkeltem Material der Tankoberseite. Lediglich in der Mitte ist ein nach oben gewölbtes "Tragflächenprofil" eingesetzt, das an seinen seitlichen Längskanten mehrfach so abgewinkelt ist, daß kastenförmige Längsholme gebildet werden. Eine Optimierung des Füllvolumens wird auf diese Weise nicht erreicht. Die Herstellung ist kompliziert, zumal die einstückig mit dem Tragflächenprofil verbundenen Längsholme zusätzlich noch das Tank-Vorderteil mit einem schräg verlaufenden Übergangsstück zum Tank-Hinterteil verbinden müssen.

Der Erfindung liegt demgegenüber die Aufgabe zugrunde, einen selbsttragenden, vorzugsweise druckfesten, Tankauflieger der eingangs beschriebenen Gattung anzugeben, bei dem die Ausnehmung dem Tankvolumen einen deutlich kleineren Volumensanteil entzieht, eine höhere, örtlich gezielt beeinflußbare Festigungssteigerung erlaubt und die Inspektion der Begrenzungswand von unten her ermöglicht. Dabei soll selbstverständlich auch die generell bestehende Forderung nach einem möglichst tiefliegenden Schwerpunkt des Tankaufliegers erfüllt werden.

Die Lösung der gestellten Aufgabe erfolgt bei dem eingangs beschriebenen Tankauflieger erfindungsgemäß dadurch, daß
a) die Begrenzungswand der Ausnehmung in Form einer Doppelwelle mit zwei seitlichen, nach oben gewölbten Zylinderteilflächen und mit einer dazwischen liegenden, nach unten gewölbten Zylinderteilfläche profiliert ist, wobei die Krümmungsachsen im wesentlichen in Fahrtrichtung verlaufen und die Krümmungsradien an den Übergangsstellen der Zylinderteilflächen gemeinsame Tangenten haben, und daß
b) die Versteifungselemente zwei Längsholme aufweisen, deren Oberkanten in den nach oben gewölbten Zylinderteilflächen liegen und die durch Querholme miteinander verbunden sind, deren Oberkanten im wesentlichen der Wellenform der Begrenzungswand angepaßt sind.

Mit einer derartigen Raumform der Begrenzungswand läßt sich das Füllvolumen des Tank-Vorderteils deutlich vergrößern, worauf in der Detailbeschreibung noch näher eingegangen wird. Der Gewinn an Volumen ist im wesentlichen auf den mittleren, nach unten gewölbten Teilabschnitt der Begrenzungswand zurückzuführen. Außerdem liegen die Verbindungsnähte der Begrenzungswand mit dem darüberliegenden Teil der Tankwand in einer im wesentlichen waagrechten Ebene, die einen sehr großen Abstand von der Tank-Längsachse besitzt.

Dennoch wird in Verbindung mit den Längs- und Querholmen eine hohe Gestaltfestigkeit erzeugt, ohne daß die Inspektionsmöglichkeit der Unterseite der Begrenzungswand verloren ginge. Durch die insgesamt sehr flache Ausbildung von Begrenzungswand und Längs- und Querholme läßt sich eine tiefe Lage des Tank-Schwerpunktes erreichen, so daß die Kurvenfestigkeit des Fahrzeugs gefördert wird.

Die Festigkeit läßt sich noch zusätzlich dadurch steigern, daß auf den von den Querholmen weggerichteten Außenseiten der Längsholme senkrechte Knotenbleche angeordnet sind, die virtuelle Verlängerungen der Querholme bilden, sich bis zu den Längskanten der Begrenzungswand erstrecken, und deren auf die Begrenzungswand zu gerichtete Oberkanten gleichfalls im wesentlichen der Wellenform der Begrenzungswand angepaßt sind.

Auf diese Weise ist die Begrenzungswand auf ihrer gesamten Breite von den Querholmen und den senkrechten Knotenblechen unterfangen, während die Längsholme an denjenigen Stellen der Begrenzungswand angeordnet sind, an denen sie eine maximale Höhe haben können, nämlich in den nach oben gewölbten Zylinderteilflächen.

Es ist dabei zur Erzielung einer maximalen Gestaltfestigkeit besonders vorteilhaft, wenn die Längs- und Querholme wenigstens teilweise als nach oben offene U-Profile ausgebildet sind, deren Oberkanten mindestens stellenweise sämtlich an die Begrenzungswand anstoßen, mit der sie üblicherweise verschweißt sind.

Es ist schließlich weiterhin von Vorteil, wenn die senkrechten Knotenbleche jeweils paarweise angeordnet sind, wenn zwischen paarweise zusammengehörigen Knotenblechen ein erstes waagrechtes Knotenblech eingeschweißt ist, und wenn auf den Außenseiten der senkrechten Knotenbleche weitere waagrechte Knotenbleche aufgeschweißt sind, wobei die waagrechten Knotenbleche in Fahrtrichtung verlaufende Außenkanten aufweisen, die miteinander fluchten und im Bereich der zur Fahrtrichtung parallelen Außenkanten der Begrenzungswand mit dieser verschweißt sind.

Durch die Wahl geeigneter Krümmungsradien für die Wellenform der Begrenzungswand lassen sich Füllvolumen einerseits und Gestaltfestigkeit andererseits weiter optimieren. Es ist besonders vorteilhaft, wenn die Krümmungsradien der nach oben gewölbten Zylinderteilflächen zwischen 250 und 450 mm, vorzugsweise bei etwa 350 mm, liegen, und wenn die Krümmungsradien der nach unten gewölbten Zylinder-Teilfläche zwischen 400 und 600 mm, vorzugsweise bei etwa 500 mm, liegen. Zusätzlich sollte das Verhältnis der Krümmungsradien zwischen 0,6 und 0,8, vorzugsweise bei etwa 0,7, liegen.

Weitere vorteilhafte Ausgestaltungen des Erfindungsgegenstandes ergeben sich aus den übrigen Unteransprüchen.

Ein Ausführungsbeispiel des Erfindungsgegenstandes wird nachstehend anhand der Figuren 1 bis 5 näher erläutert.

Es zeigen:
- Figur 1: einen vertikalen Längsschnitt durch das Tank-Vorderteil im Bereich der Ausnehmung,
- Figur 2: einen vertikalen Radialschnitt entlang der Linie II-II in Figur 1,
- Figur 3: eine perspektivische Darstellung der Gesamtanordnung der Versteifungselemente im Bereich des Sattels der Zugmaschine,
- Figur 4: eine perspektivische Darstellung eines zusätzlichen Querholms, der zwischen den Längsholmen und dem Vollquerschnitt des Aufliegers angeordnet ist und zusammen mit einem Ablaufstutzen eine Entleerungsvorrichtung für das Tank-Vorderteil bildet, und
- Figur 5: den unteren Teil von Figur 2 in vergrößertem Maßstab.

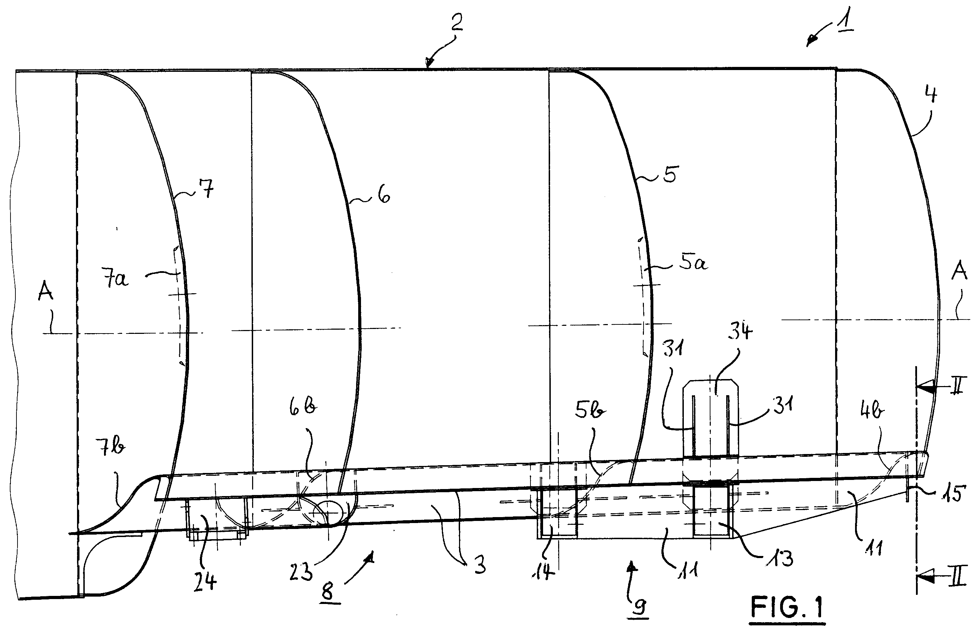

In Figur 1 ist das Vorderteil 1 eines selbsttragenden Tankaufliegers dargestellt, dessen Mantel 2 einen Zylinderstumpf mit der Längsachse A-A und einem sehr spitzen Öffnungswinkel umschließt. Der Mantel 2 wird zunächst durch Rundwalzen vollständig ausgebildet; im Anschluß daran wird auf der Unterseite über eine vorgegebene Länge ein Sektor herausgetrennt, der nachfolgend durch eine Begrenzungswand 3 mit den nachstehend noch näher beschriebenen Einzelheiten ersetzt wird.

In den Mantel 2 sind eine vordere Abschlußwand 4 und Innenwände 5, 6 und 7 eingesetzt, die sämtlich als sogenannte Klöpperböden ausgebildet sind. Die Innenwände 5 und 7 sind als Schwallwände ausgebildet und mit Öffnungen 5a und 7a versehen; zwischen der Abschlußwand 4 und der Innenwand 6 wird ein in sich geschlossenes Tankvolumen gebildet. Die Unterseite der Abschlußwand 4 und der Innenwände 5 bis 7 sind mit Ausschnitten versehen, die gleichfalls der Raumform der unteren Begrenzungswand 3 entsprechen, da sie mit dieser verschweißt sind. Die Schnittkanten 4b, 5b und 6b sind gestrichelt dargestellt. Auch die Innenwand 7 wird von der Begrenzungswand 3 durchdrungen, deren Endkante 7b gleichfalls dargestellt ist.

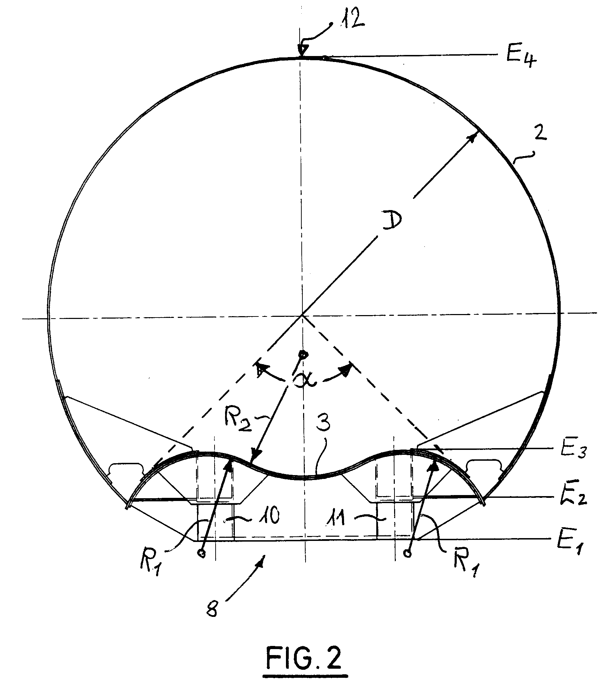

Figur 2 zeigt die Verhältnisse im Bereich der vertikalen und radialen Schnittebene gemäß der Linie II-II in Figur 1. Es ist hier jedoch nicht dargestellt, daß sich der in der Schnittebene gemessene Durchmesser D wegen der Kegelform des Mantels 2 in Blickrichtung, d.h. nach hinten erweitert. Es ist jedoch gezeigt, daß der sektorförmige Ausschnitt im Mantel 2, der nachfolgend durch die Begrenzungswand 3 ersetzt wird, sich über einen Winkel α von nur etwa 90 Grad erstreckt, so daß ein relativ großes Kammervolumen entsteht.

Durch die betreffende Ausnehmung 8 wird im Sattellagerungsbereich 9 sowie in dessen Umgebung der erforderlich Platz für die Unterbringung und Bewegung des Sattels und des hinteren Endes des Sattelfahrzeuges bei entsprechender Tieflegung des Tankschwerpunktes geschaffen.

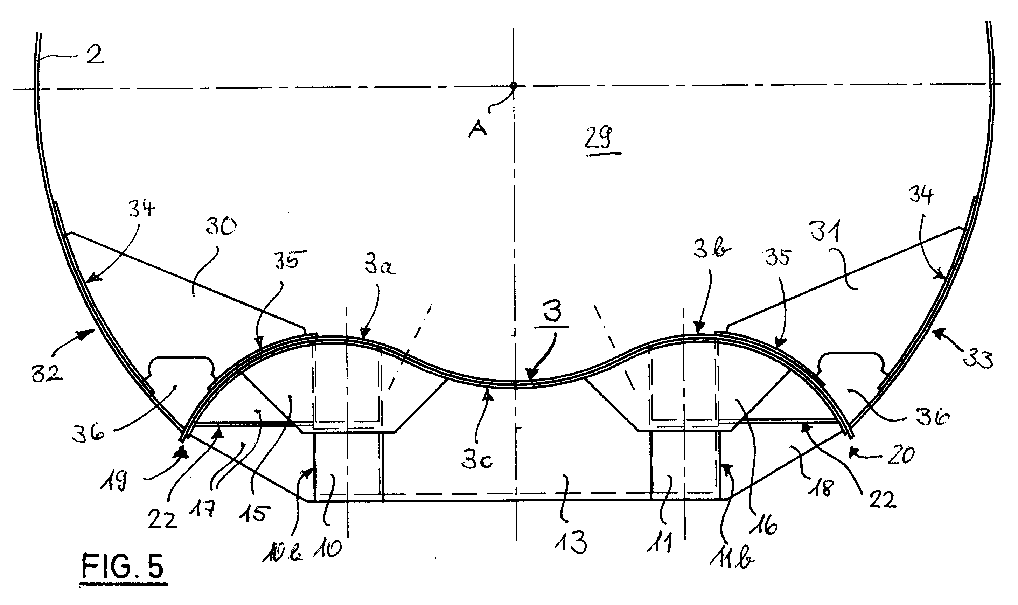

Wie aus den Figuren 2 und 5 hervorgeht, ist die Begrenzungswand 3 der Ausnehmung 8 in Form von zwei seitlich außenliegenden, nach oben gewölbten Zylinderteilflächen 3a und 3b mit einem Krümmungsradius R₁ und mit einer dazwischenliegenden, nach unten gewölbten Zylinderteilfläche 3c mit einem Krümmungsradius R₂ ausgebildet. Auf die Dimensionierungsbereiche der Krümmungsradien und des Verhältnisses der Krümmungsradien untereinander wurde bereits weiter oben hingewiesen. Die einzelnen Zylinderteilflächen gehen knickfrei ineinander über, d.h. die Krümmungsradien haben im Bereich der strichpunktiert angedeuteten Übergangsstellen zwischen den Zylinderteilflächen gemeinsame Tangenten.

In dem Tankquerschnitt gemäß Figur 2 lassen sich vier zumindest im wesentlichen waagrechte Ebenen E₁ bis E₄ definieren, die folgende Bedeutung haben: Die Ebene E₁ wird durch die Höhe des Sattels vorgegeben. In der Ebene E₂ liegen die seitlichen, in Fahrtrichtung verlaufenden, Schnittkanten bzw. Schweißnähte zwischen dem Mantel 2 und der Begrenzungswand 3. In der Ebene E₃ liegen die obersten Mantellinien der Zylinderteilflächen 3a und 3b. Es ist noch von Bedeutung, daß die tiefstliegende Mantellinie der nach unten gewölbten Zylinderteilfläche 3c etwa in der Mitte zwischen den Ebenen E₂ und E₃ liegen sollte, womit die Raumform der Begrenzungswand 3 zumindest sehr weitgehend definiert ist. Die maximale Höhe der Ebene E₄ wird durch die Straßenverkehrszulassungs-Ordnung festgelegt.

Bei der Konstruktion dieses Querschnitts sind folgende Rahmenbedingungen zu beachten: Der Abstand E₄ -E₃ soll sowohl im Hinblick auf das Tankvolumen als auch im Hinblick auf das Widerstandsmoment des Tankaufliegers insgesamt so groß wie möglich gewählt werden. Der Abstand E₃ -E₁ soll kleinstmöglich gewählt werden, jedoch ist hier im Hinblick auf den darin enthaltenen Abstand E₂ -E₁ auf das Widerstandsmoment der Längsholme 10 und 11 Rücksicht zu nehmen, auf deren Gestalt weiter unten noch näher eingegangen wird.

Auch auf die Verhältnisse R₁:D und R₂:D sollte Rücksicht genommen werden. Das zuerst genannte Verhältnis sollte zwischen 0,10 und 0,20, das zuletzt genannte Verhältnis zwischen 0,20 und 0,30 liegen. Die genannten Verhältnisse entsprechen den als maßstäblich zu wertenden Darstellungen in den Figuren 2 und 5.

Die sich auf die Fahrtrichtung und die Ausdrücke "waagrecht", "senkrecht" und "Zylinderteilflächen" beziehenden Definitionen sind unter Einbeziehung gewisser Toleranzen zu werten, die schon darauf zurückzuführen sind, daß die einzelnen Tankabschnitte Firstlinien 12 (oberste Mantellinien) aufweisen, die in einer gemeinsamen Geraden liegen, so daß die Achsen A-A der Tankabschnitte notwendigerweise zur Tankmitte hin unter einem spitzen Winkel nach unten verlaufen. Die Zylinderteilflächen müssen keine Ausschnitte aus einer exakten Zylinderfläche sein. Geringe Abweichungen oder die Ausbildung als Kegelstumpf-Teilflächen mit schlankem Kegelwinkel ändern nichts an der Gültigkeit der Definition.

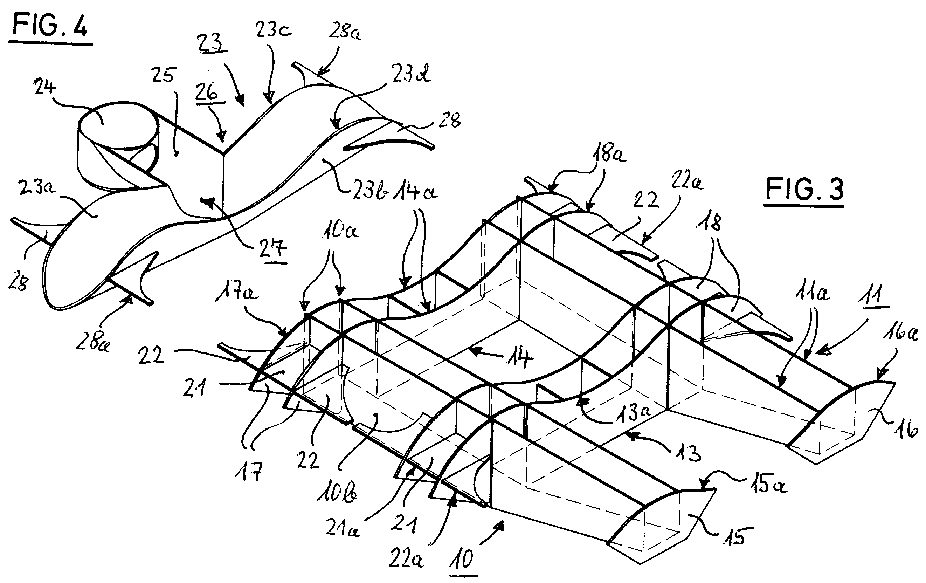

Wie insbesondere aus den Figuren 3 und 5 hervorgeht, besitzen die Versteifungselemente zwei Längsholme 10 und 11, deren Oberkanten 10a und 11a in den nach oben gewölbten Zylinderteilflächen 3a und 3b liegen. Die Längsholme 10 und 11 sind durch Querholme 13 und 14 miteinander verbunden, deren Oberkanten 13a und 14a im wesentlichen der Wellenform der Begrenzungswand 3 angepaßt sind. Dadurch wird ein im wesentlichen rechteckiger Rahmen gebildet, wie dies sprechend aus Figur 3 hervorgeht.

Die Längsholme 10 und 11 sind in Fahrtrichtung über den Querholm 13 hinaus verlängert und besitzen an ihren vorderen Enden Knotenbleche 15 und 16, deren Oberkanten 15a und 16a gleichfalls dem an den Berührungslinien vorhandenen Querschnitt der Begrenzungswand 3 angepaßt sind.

Die Längsholme 10 und 11 sowie die Querholme 13 und 14 sind im Querschnitt als nach oben offene U-Profile ausgebildet, deren Oberkanten mindestens stellenweise, vorzugsweise aber auf der gesamten Länge an die Begrenzungswand 3 anstoßen, so daß sie mit dieser verschweißt werden können.

Auf den von den Querholmen 13 und 14 weg gerichteten Außenseiten 10b und 11b der Längsholme 10 und 11 sind senkrechte Knotenbleche 17 und 18 angeordnet, die virtuelle Verlängerungen der Querholme 13 und 14 bilden, sich bis zu den Längskanten 19 und 20 der Begrenzungswand 3 erstrecken, und deren auf die Begrenzungswand zu gerichtete Oberkanten 17a und 18a gleichfalls im wesentlichen der Wellenform der Begrenzungswand 3 angepaßt sind.

Wie aus Figur 3 ersichtlich ist, sind die senkrechten Knotenbleche 17 und 18 jeweils paarweise angeordnet, und im Zwischenraum zwischen einem Paar von zusammengehörigen Knotenblechen ist jeweils ein erstes waagrechtes, in der Draufsicht rechteckiges, Knotenblech 21 eingeschweißt. Auf den beiden voneinander abgekehrten Außenseiten der senkrechten Knotenbleche 15 und 16 sind weitere waagrechte Knotenbleche 22 aufgeschweißt, wobei die waagrechten Knotenbleche 21 und 22 in Fahrtrichtung verlaufende Außenkanten 21a und 22a aufweisen, die miteinander fluchten und im Bereich der zur Fahrtrichtung parallelen Längskanten 19 und 20 der Begrenzungswand 3 mit dieser verschweißt sind (siehe insbesondere Figur 5). Die Knotenbleche 28 sind in etwa dreieckig ausgebildet, wobei die Hypothenuse bogenförmig nach innen gekrümmt ist, um den Knotenblechen eine gewisse Elastizität zur Vermeidung von Spannungsspitzen an den Enden der Schweißnähte zu verleihen.

Zwischen den in Fahrtrichtung hinteren Enden der Längsholme 10 und 11 und dem Vollquerschnitt des Aufliegers, der in Figur 1 ganz links dargestellt ist, ist mit der Begrenzungswand 3 ein weiterer Querholm 23 verschweißt, der in Figur 4 dargestellt ist. Dieser Querholm 23 ist gleichfalls als nach oben offenes U-Profil ausgebildet, im Bereich des Jochs aber gut abgerundet, und besitzt Schenkel 23a und 23b, deren Oberkanten 23c und 23d gleichfalls der Wellenform der Begrenzungswand 3 angepaßt sind.

Der weitere Querholm 23 ist als sogenannter Auslauftunnel ausgebildet und mit einem durch ein Ventil verschließbaren Ablaufstutzen 24 für den Inhalt des angeschlossenen Tankabschnitts verbunden. Zu diesem Zweck ist der Ablaufstutzen 24 über eine U-förmige Rinne 25 mit dem in Fahrtrichtung hinteren Schenkel 23a des weiteren Querholms 23 verbunden, der an der Verbindungsstelle 26 eine Durchtrittsöffnung 27 aufweist.

Auf den Außenseiten der Schenkel 23a und 23b des weiteren Querholms 23 sind weitere waagrechte Knotenbleche 28 aufgeschweißt, deren Außenkanten 28a in Fahrtrichtung verlaufen und paarweise miteinander fluchten sowie im Bereich der zur Fahrtrichtung parallelen Längskanten 19 und 20 der Begrenzungswand 3 mit dieser verschweißt sind.

Schließlich ist die Begrenzungswand 3 im Bereich mindestens eines der Querholme 13 und/oder 14 über im Tankinnern 29 liegende Innen-Knotenbleche 30 und 31 mit den über der Begrenzungswand 3 liegenden Bereichen 32 und 33 des Mantels 2 verschweißt. Die Innen-Knotenbleche 30 und 31 sind jeweils paarweise vorhanden und an beiden Enden mit entsprechend den Anschlußstellen gewölbten Flanschplatten 34 und 35 verbunden, wie sich dies aus einer Zusammenschau der Figuren 1 und 5 ergibt. Es bleibt noch zu erwähnen, daß die Innen-Knotenbleche 30 und 31 im Bereich ihrer Unterkanten mit Durchbrechungen 36 versehen sind, um eine weitgehend restlose Tankentleerung zu ermöglichen.

Der Erfindungsgegenstand erfüllt sämtliche Aufgaben und Teilaufgaben und führt zu einem selbsttragenden Tankauflieger, der auch im Bereich des mit der Ausnehmung 8 versehenen Tank-Vorderteils 1 bei einem maximalen Füllvolumen eine optimale Gestaltfestigkeit aufweist, und zwar sowohl gegenüber statischen als auch gegenüber dynamischen Beanspruchungen sowie gegenüber einer Druckbeaufschlagung vom Tankinnern her. Diese Vorteile werden trotz einer niedrigen Schwerpunktlage des gesamten Tankaufliegers erreicht.

## Patentansprüche

1. Selbsttragender Tankauflieger für Sattelfahrzeuge mit mindestens einer sich in Fahrtrichtung erstreckenden Längsachse (A-A) und mit einem Tank-Vorderteil (1), das in seinem Sattellagerungsbereich (9) durch Abweichung vom Kreisquerschnitt an der Unterseite eine Ausnehmung (8) für die Aufnahme des Sattels und der Hinterräder des Sattelfahrzeugs aufweist, wobei eine die Tankunterseite bildende Begrenzungswand (3) der Ausnehmung (8) durch Profilierung eine erhöhte Gestaltfestigkeit besitzt und zusätzlich mit eingeschweißten Versteifungselementen versehen ist, **dadurch gekennzeichnet**, daß
a) die Begrenzungswand (3) der Ausnehmung (8) in Form einer Doppelwelle mit zwei seitlichen, nach oben gewölbten Zylinderteilflächen (3a, 3b) und mit einer dazwischenliegenden, nach unten gewölbten Zylinderteilfläche (3c) profiliert ist, wobei die Krümmungsachsen im wesentlichen in Fahrtrichtung verlaufen und die Krümmungsradien an den Übergangsstellen der Zylinderteilflächen gemeinsame Tangenten haben und daß
b) die Versteifungselemente zwei Längsholme (10, 11) aufweisen, deren Oberkanten (10a, 11a) in den nach oben gewölbten Zylinderteilflächen (3a, 3b) liegen und die durch Querholme (13, 14) miteinander verbunden sind, deren Oberkanten (13a, 14a) im wesentlichen der Wellenform der Begrenzungswand (3) angepaßt sind.

2. Tankauflieger nach Anspruch 1, **dadurch gekennzeichnet**, daß auf den von den Querholmen (13, 14) weggerichteten Außenseiten (10b, 11b) der Längsholme (10, 11) senkrechte Knotenbleche (17, 18) angeordnet sind, die virtuelle Verlängerungen der Querholme (13, 14) bilden, sich bis zu den Längskanten (19, 20) der Begrenzungswand (3) erstrecken, und deren auf die Begrenzungswand zu gerichtete Oberkanten (17a, 18a) gleichfalls im wesentlichen der Wellenform der Begrenzungswand (3) angepaßt sind.

3. Tankauflieger nach Anspruch 2, **dadurch gekennzeichnet**, daß die obersten Mantellinien der seitlich äußeren Zylinderteilabschnitte (3a, 3b) eine im wesentlichen waagrechten Ebene E₃ definieren, daß die seitlich außen liegenden Längskanten (19, 29) der Begrenzungswand (3) eine weitere im wesentlichen waagrechte und unter der Ebene E₃ liegende Ebene E₂ definieren, und daß die unterste Mantellinie des mittleren Zylinderteilabschnitts (3c) in etwa in der Höhen-Mitte zwischen den Ebenen E₂ und E₃ liegt.

4. Tankauflieger nach Anspruch 3, **dadurch gekennzeichnet**, daß die seitlich außen liegenden Längskanten (19, 20) der Begrenzungswand (3) zusammen mit der Längsachse (A-A) einen Sektor eines Kegelstumpfes definieren, der einen Sektorwinkel von etwa 90 Grad besitzt (Figur 2).

5. Tankauflieger nach Anspruch 4, **dadurch gekennzeichnet**, daß die virtuellen radialen Sektorwände im Bereich der Längskanten (19, 20) etwa tangential zu den Zylinderteilabschnitten (3a, 3b) verlaufen.

6. Tankauflieger nach Anspruch 1, **dadurch gekennzeichnet**, daß die Krümmungsradien R₁ der nach oben gewölbten Zylinderteilflächen zwischen 250 und 450 mm liegen und die Krümmungsradien R₂ der nach unten gewölbten Zylinderteilfäche zwischen 400 und 600 mm.

7. Tankauflieger nach Anspruch 6, **dadurch gekennzeichnet**, daß das Verhältnis der Krümmungsradien R₁:R₂ zwischen 0,6 und 0,8 vorzugsweise bei etwa 0,7 liegt.

8. Tankauflieger nach Anspruch 6, **dadurch gekennzeichnet**, daß das Verhältnis der Krümmungsradien R₁, R₂ zum Tankdurchmesser D in folgenden Bereichen liegt: R₁:D = 0,10 bis 0,20 und R₂:D = 0,20 bis 0,30.

9. Tankauflieger nach Anspruch 2, **dadurch gekennzeichnet**, daß die Längs- und Querholme wenigstens teilweise als nach oben offene U-Profile ausgebildet sind, deren Oberkanten mindestens stellenweise sämtlich an die Begrenzungswand (3) anstoßen.

10. Tankauflieger nach Anspruch 9, **dadurch gekennzeichnet**, daß die in Fahrtrichtung vorderen Enden der Längsholme (10, 11) durch weitere, aufgeschweißte Knotenbleche (15, 16) verschlossen sind, deren Oberkanten (15a, 16a) gleichfalls der Wellenform der Begrenzungswand (3) angepaßt sind.

11. Tankauflieger nach Anspruch 1, **dadurch gekennzeichnet**, daß zwischen den in Fahrtrichtung hinteren Enden der Längsholme (10, 11) und dem Vollquerschnitt des Tankaufliegers mit der Begrenzungswand (3) ein weiterer Querholm (23) verschweißt ist, der als nach oben offenes U-Profil mit Schenkeln (23a, 23b) ausgebildet ist, deren Oberkanten (23c, 23d) der Wellenform der Begrenzungswand (3) angepaßt sind.

12. Tankauflieger nach Anspruch 11, **dadurch gekennzeichnet**, daß der weitere Querholm (23) als Auslauftunnel ausgebildet und mit einem Verschließbaren Ablaufstutzen (24) für den Tankinhalt verbunden ist.

13. Tankauflieger nach Anspruch 12, **dadurch gekennzeichnet**, daß der Ablaufstutzen (24) über eine U-förmige Rinne (25) mit dem in Fahrtrichtung hinteren Schenkel (23a) des weiteren Querholms (23) verbunden ist, der an der Verbindungsstelle (26) eine Durchtrittsöffnung (27) aufweist.

14. Tankauflieger nach Anspruch 2, **dadurch gekennzeichnet**, daß die senkrechten Knotenbleche (17, 18) jeweils paarweise angeordnet sind, daß zwischen paarweise zusammengehörigen Knotenbleche ein erstes waagrechtes Knotenblech (21) eingeschweißt ist, und daß auf den Außenseiten der senkrechten Knotenbleche weitere waagrechte Knotenbleche (22) aufgeschweißt sind, wobei die waagrechten Knotenbleche (21, 22) in Fahrtrichtung verlaufende Außenkanten (21a, 22a) aufweisen, die miteinander fluchten und im Bereich der zur Fahrtrichtung parallelen Längskanten (19, 20) der Begrenzungswand (3) mit dieser verschweißt sind.

15. Tankauflieger nach Anspruch 11, **dadurch gekennzeichnet**, daß auf den Außenseiten der Schenkel (23a, 23b) des weiteren Querholms (23) weitere waagrechte Knotenbleche (28) aufgeschweißt sind, deren Außenkanten (28a) in Fahrtrichtung verlaufen und paarweise miteinander fluchten sowie im Bereich der zur Fahrtrichtung parallelen Längskanten (19, 20) der Begrenzungswand (3) mit dieser verschweißt sind.

16. Tankauflieger nach Anspruch 1, **dadurch gekennzeichnet**, daß die Begrenzungswand (3) im Bereich mindestens eines der Querholme (13, 14) über im Tankinnern (29) liegende Innen-Knotenbleche (30, 31) mit den über der Begrenzungswand (3) liegenden Bereichen (32, 33) des Mantels (2) verschweißt ist.
